# EUROPÄISCHE PATENTSCHRIFT

(11) **EP 0 751 034 B1**
(45) Veröffentlichungstag und Bekanntmachung des Hinweises auf die Patenterteilung: **15.09.1999**
(21) Anmeldenummer: 96110348.8
(22) Anmeldetag: 27.06.1996
(51) Int. Cl.: B60N 2/28

(54) **Autokindersitz**
Children's seat for vehicles
Siège d'enfants pour véhicules

(30) Priorität: 30.06.1995 DE 29510610 U
(43) Veröffentlichungstag der Anmeldung: 02.01.1997
(73) Patentinhaber: Schräder, Margarete, D-95352 Marktleugast (DE)
(72) Erfinder: Schräder , Margarete, D-95352 Marktleugast (DE)
(74) Vertreter: Tergau, Enno, Dipl.-Ing.

(56) Entgegenhaltungen:
- GB-A- 2 271 927

## Beschreibung

Die Erfindung betrifft einen Autokindersitz mit den Merkmalen des Oberbegriffs des Anspruches 1.

Bei Autokindersitzen ist es erwünscht, dem Kind während der Autofahrt auch ein entspanntes Schlafen zu ermöglichen. Das ist in der normalen Sitzposition mit aufrechtstehender Rücklehne nur begrenzt möglich. Um bei einteiligen Sitzen trotzdem ein komfortableres Schlafen des Kindes zu ermöglichen, ist es bekannt, die Sitzposition gegenüber dem Autositz, auf weichem der Kindersitz aufliegt, in eine in Schlafstellung geneigte Position zu bringen. Dazu sind bereits Keile verwendet worden, die von vorne entgegen der Fahrrichtung zwischen Sitzteil und Autositzfläche eingeschoben werden. Dadurch bildet das Sitzteil mit der Autositzfläche einen spitzen Winkel und die Rücklehne des Kindersitzes ist aus ihrer im wesentlichen aufrechtstehenden Position um einen dem Keilwinkel entsprechenden Winkelbereich nach hinten geneigt.

Andere Lösungen beinhalten z.B. ein Führungsgestell, welches auf dem Autositz fixiert wird und seinerseits eine Schwenkführung für den eigentlichen Kindersitz bildet, der in diesem Gestell beispielsweise mittels einer Kufenführung in unterschiedliche Schwenkstellungen zwischen einer Sitzposition und einer Schlafposition verstellbar ist.

Die bekannten Lösungen für eine Verstellbarkeit zur Ermöglichung einer Sitzstellung und eIner Schlafstellung erfordern zusätzliche Teile, die aufwendig und dementsprechend kostenintensiv sind. Zur Verringerung dieser Teile ist es bereits aus GB-A-2 271 927 bei einem Autokindersitz mit den Merkmalen des Oberbegriffs des Anspruches 1 bekannt, die Lösbarkeit zwischen Sitzteil und Rücklehne durch ein einfaches Zusammenstecken dieser beiden Teile in einer Relativstellung zueinander zu ermöglichen, die nicht der Sitzposition der Rücklehne gegenüber dem Sitzteil entspricht. In der Sitzposition der Rücklehne hingegen ist deren Lösbarkeit vom Sitzteil gesperrt. Bei diesem bekannten Autokindersitz ist die Rücklehne in einer Position in das hintere Ende des Sitzteils ungehindert einschiebbar und herausziehbar, in welcher die Rücklehnenebene etwa eine Fortsetzung der Sitzebene bildet (Streckstellung). Dies hat den Nachteil, daß eine Verbindung und eine Lösung von Sitzteil und Rücklehne praktisch nicht im Automobil selbst vorgenommen werden können, weil im Automobil für eine solche Strecklage meist der notwendige Raum fehlt. Schließlich werden solche Autokindersitze in der Regel auf die Rücksitzbank des Automobils aufgestellt. Bei dem bekannten Autokindersitz liegt in Sitzstellung dessen Rücklehne im wesentlichen vollflächig an der Autositzrücklehne an. Der Autokindersitz ist durch das fahrzeugeigene Rückhaltesystem am Autorücksitz fixiert und die vorerwähnte Anlage bestimmt gewissermaßen die Sitzstellung der Rücklehne des Autokindersitzes gegenüber dessen Sitzteil.

Der Erfindung liegt die Aufgabe zugrunde, einen kostengünstigen und einfach montierbaren Autokindersitz zu schaffen, der eine Sitzstellung und eine Schlafstellung ermöglicht. Die Lösung ist im Anspruch 1 niedergelegt. Dadurch bildet die Rücklehne mit dem Sitzteil in derjenigen Relativstellung, in der das Zusammensetzen und das Lösen dieser beiden Teile voneinander möglich ist, einen verhältnismäßig kleinen, vorzugsweise sogar einen spitzen Winkel , während dieser bei dem aus GB-A-2 271 927 bekannten Autokindersitz etwa 180° (Streckstellung) beträgt. Das erleichtert erheblich die Montierbarkeit des Autokindersitzes. Dadurch ist es auch in einfacher Weise möglich, dessen Sitzteil gegebenenfalls ohne Rücklehne zu benutzen.

Die Ausführung nach Anspruch 2 bildet eine bauliche Vereinfachung und ermöglicht ein einfaches Zusammenfügen und Lösen der beiden Teile des Autokindersitzes.

Anspruch 3 und 4 ermöglichen eine einfache und kostengünstige Herstellbarkeit bei gleichzeitig großer mechanischer Festigkeit der beiden Sitzteile. Die Ansprüche 5-7 sind auf bauliche Einzelheiten gerichtet, die weitere Vorteile im Sinne der grundsätzlichen Aufgabenstellung gewährleisten.

Der Gegenstand der Erfindung wird anhand eines in den Figuren dargestellten Ausführungsbeispiels näher erläutert. Es zeigen:
- Fig. 1: eine Explosionsdarstellung des Sitzteiles und der Rücklehne eines erfindungsgemäßen Autokindersitzes in voneinander separierter, einschubbereiter Stellung,
- Fig. 2: eine Darstellung der beiden Teile in eingesteckter Sitzstellung der Rücklehne gegenüber dem Sitzkissen,
- Fig. 3: einen vergrößerten Vertikalschnitt von Sitzteil und Rücklehne in ihrem Verbindungsbereich, und zwar in gelöster Steckausgangsstellung zwischen diesen beiden Teilen,
- Fig. 4: eine Darstellung analog Fig. 3 in gefügter Sitzstellung zwischen Sitzteil und Rücklehne,
- Fig. 5: eine Darstellung analog Fig. 4 in gefügter Liegestellung zwischen Sitzteil und Rücklehne,

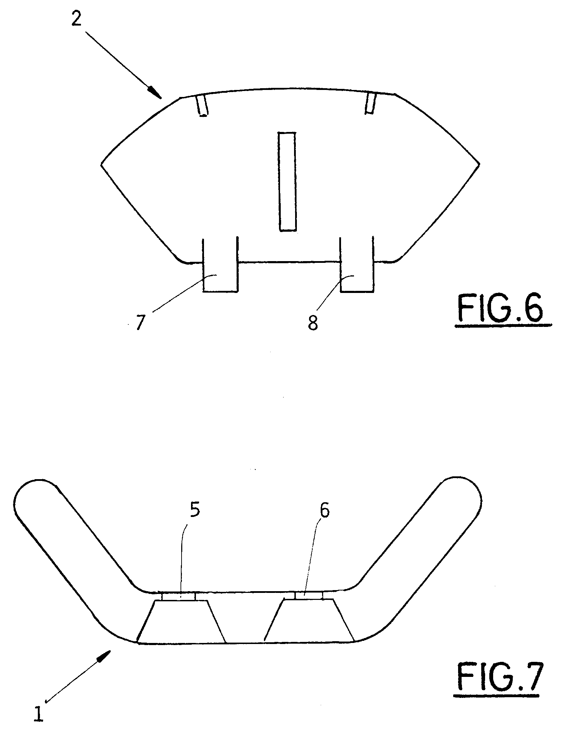

- Fig. 6 und 7: Rückansichten von Rücklehne (Fig. 6) und von Sitzteil (Fig. 7) in ihrer voneinander gelösten Fügeausgangsstellung entsprechend Fig. 1 (Blickrichtung A).

Der Kindersitz besteht im wesentlichen aus dem Sitzteil 1 und der Rücklehne 2. Das Sitzteil 1 trägt an seinem rückseitigen Ende 3 zwei quer zur Mittellängsrichtung 4 nebeneinander positionierte Stecköffnungen 5,6 für die Aufnahme der beiden am unteren Ende der Rücklehne 2 angebrachten Stecklaschen 7,8, die eine etwa vertikale Fortsetzung der Erstreckung der Rücklehne 2 bilden. Die Sitzlängsrichtung 4 entspricht bei normaler Positionierung des Kindersitzes im Fahrzeug (nicht dargestellt) dessen Fahrrichtung. Die Stecklaschen 7,8 sind einstückig mit der Rücklehne 2 ausgebildet. Die Rücklehne 2 ist wie das Sitzteil 1 ein aus Kunststoff gefertigtes Blasteil.

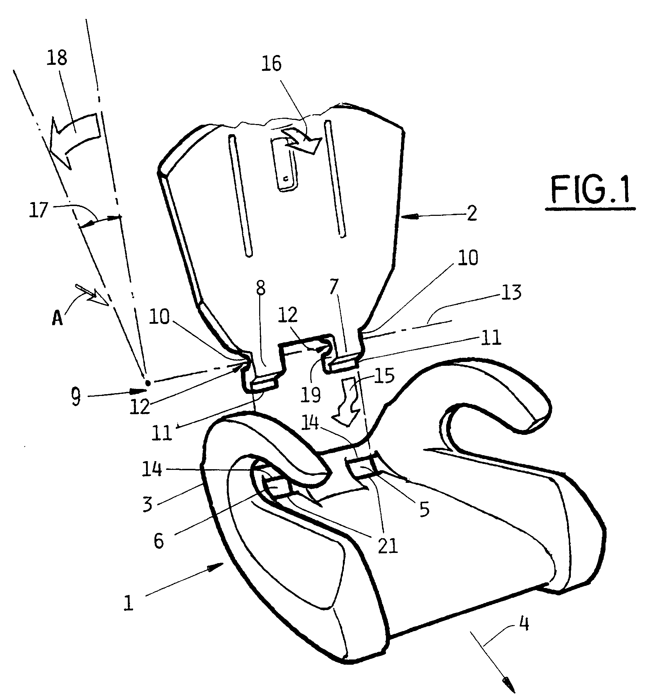

Die Stecklaschen 7,8 weisen in Seitenansicht (Blickrichtung 9 in Fig. 1) eine Z-Form auf. Der horizontale Fußschenkel 10 der Z-Form liegt etwa in der Ebene der Rücklehne 2. Der dazu parallele, horizontale Kopfschenkel der Z-Form ist der Steckschenkel 11 und der zwischen den beiden Horizontalschenkeln 10,11 der Z-Form befindliche Rumpfteil der Z-Form trägt die Bezugsziffer 19. Wenn vorstehend von 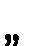 Horizontalschenkel" die Rede ist, so ist damit nicht etwa dessen Ausrichtung in Benutzungsstellung der Rücklehne 2 sondern lediglich dessen normale Ausrichtung bei dem Schriftbuchstaben Z gemeint.

Durch die Z-Form der Stecklaschen 7,8 ist auf deren dem hinteren Sitzteilende 3 zugewandter Rückseite eine Hohlkehle 12 in Form etwa eines konkaven Zylindermantelsegments gebildet. Diese Hohlkehlen 12 beaufschlagen nach Art von Gleitschalen die hinteren Begrenzungsstege 14 der Stecköffnungen 5,6, die damit die Funktion einer Schwenkachse 13 gegenüber den Stecklaschen 7,8 bzw. der Rücklehne 2 ausüben.

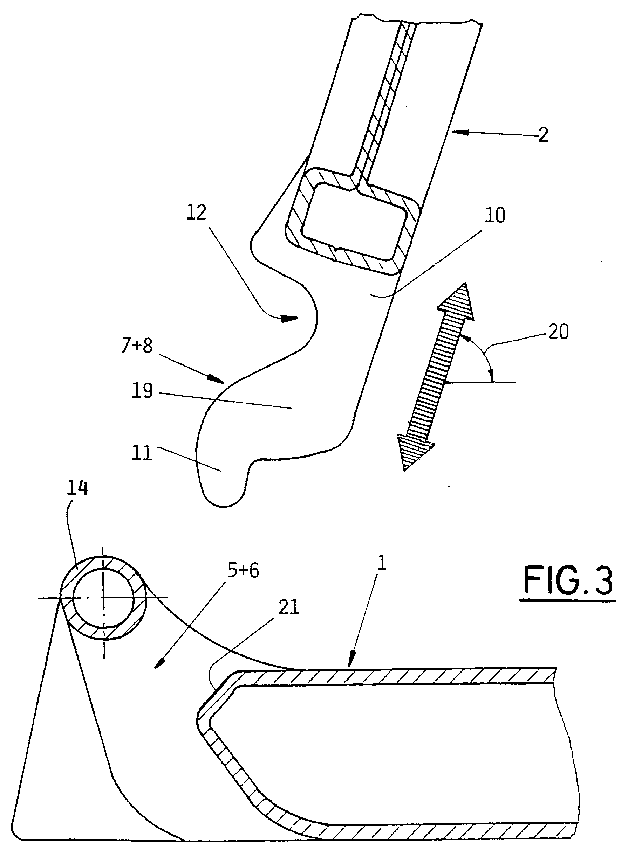

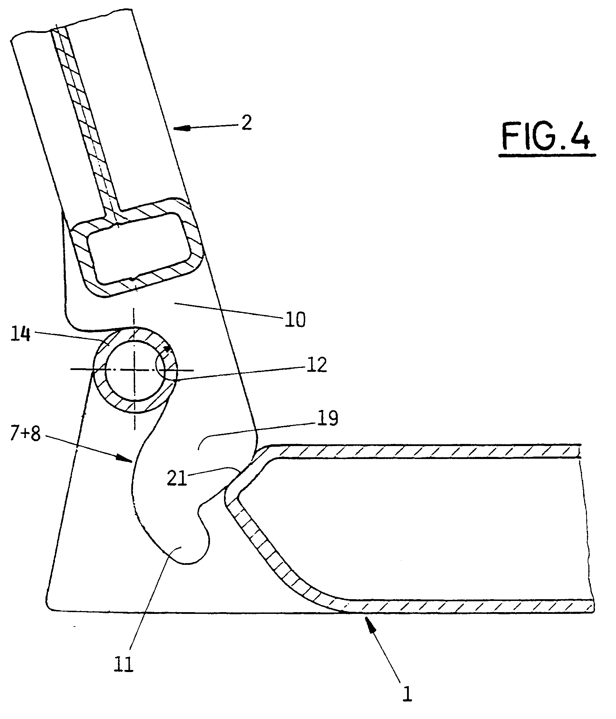

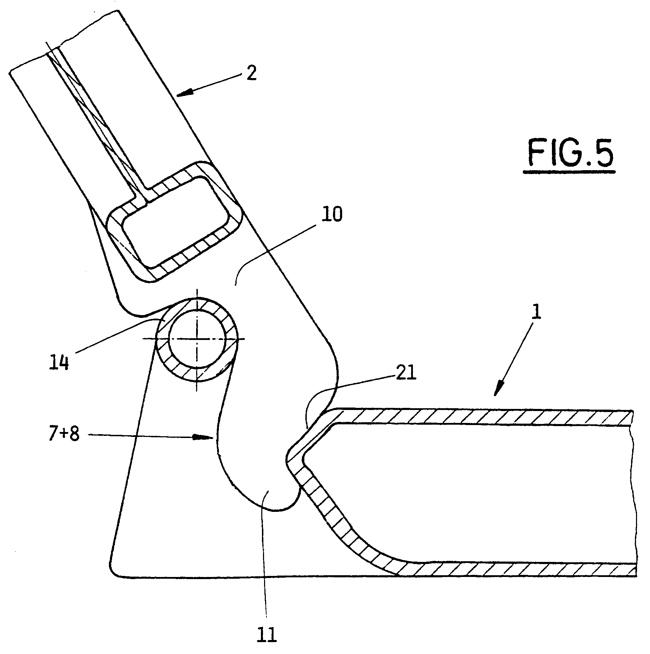

Die Ausgangsstellung bei vom Sitzteil 1 gelöster Rücklehne 2 ist in Fig. 3 dargestellt. In dieser Fügeausgangsstellung ist der Fügewinkel 20 zwischen Oberfläche des Sitzteils 1 und der Längserstreckung der Rücklehne 2 ein spitzer Winkel. In dieser spitzwinkligen Ausrichtung gegenüber dem Sitzteil 1 werden die Stecklaschen 7,8 in die Stecköffnungen 5,6 eingeführt, bis die Hohlkehle 12 etwa den Begrenzungssteg 14 formschlüssig umfaßt (Fig. 4,5). Im wesentlichen in dieser spitzwinkligen Relativstellung (Fügewinkel 20) läßt sich die Rücklehne 2 in gleicher Weise einfach wieder vom Sitzteil 1 lösen.

Aus dieser Fügestellung wird die Rücklehne 2 entgegen dem Uhrzeigersinn in ihre aufrechtstehende Sitzstellung (Fig. 4) entgegen dem Uhrzeigersinn geschwenkt. In dieser Sitzstellung stützen sich die Stecklaschen 7,8 mit dem Rumpfteil 19 ihrer Z-Form an der vorderseitigen Begrenzungskante 21 der Stecköffnungen 5,6 des Sitzteiles 1 ab. Die vorderen Begrenzungskanten 21 sind dazu leicht ausgemuldet. Sie gewährleisten dadurch einen leichten Reibungsschluß zur Beibehaltung der der Sitzstellung zugeordneten Neigung der Rücklehne 2 gegenüber dem Sitzteil 1. Der Autokindersitz steht in Gebrauchsstellung in der Regel auf einem Fahrzeugsitz, meistens auf dem Fahrzeugrücksitz auf und die Neigung der Rücklehne 2 in Sitzposition wird durch ihre flächige Anlage an der Rücklehne des Fahrzeugsitzes vorbestimmt. Im übrigen ist in aller Regel der Sitz in dieser Position durch das fahrzeugeigene Rückhaltesystem gegen den Fahrzeugsitz fixiert.

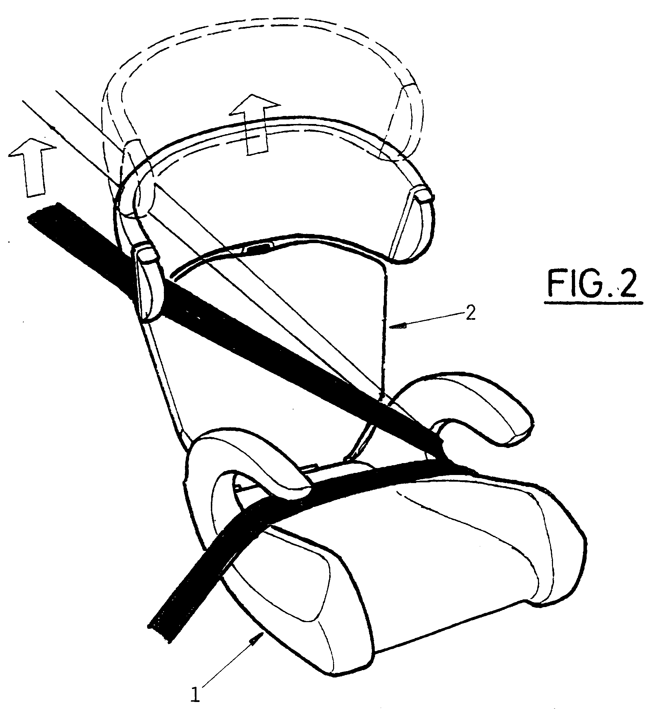

Die Sitzstellung ist in Fig. 2 in ausgezogenen Linien am kompletten Autokindersitz dargestellt. In dieser Stellung ist der Winkel 20 zwischen Rücklehne 2 und Sitzteil 1 ersichtlich größer als in der Fügestellung nach Fig. 3 und damit (Fig. 4) bereits ein stumpfer Winkel.

Aus der Sitzstellung gemäß Fig. 4 läßt sich der Kindersitz einfach in eine Liegestellung (Fig. 5) überführen, in der die Rücklehne 2 deutlich stärker gegenüber dem Sitzteil 1 geneigt ist als in der in Fig. 4 dargestellten Sitzstellung. Der Schwenkwinkel 17 zur Überführung aus der Stizstellung (Fig. 4) in die Liegestellung (Fig. 5) ist in Fig. 1 genauso dargestellt wie die Schwenkrichtung 18. Die Größe des Schwenkwinkels 17 ist durch die Konfiguration der Z-Form der Laschen 7,8 und der Gegenform der Stecköffnungen 5,6 vorbestimmbar. Zur Überführung des Autokindersitzes aus der Sitzstellung (Fig. 4) in die Liegestellung (Fig. 5) braucht das Sitzteil des auf dem Fahrzeugsitz ruhenden Kindersitzes nur in Fahrrichtung 4 nach vorne gezogen zu werden. Dann schwenkt sich bereits weitgehend selbsttätig die Rücklehne 2 aus ihrer steileren Sitzstellung (Fig 4) in die Liegestellung (Fig. 5), da die Rücklehne 2 von Hause aus durch den Körper des einsitzenden Kindes in Schwenkrichtung 18 beaufschlagt ist. Der Neigungswinkel der Rücklehne in Liegestellung (Fig. 5) wird durch den Anschlag des Kopfschenkels 11 der Stecklaschen 7,8 an der vorderseitigen Begrenzungskante 21 der Stecköffnungen 5,6 bestimmt.

Der besondere Wert des erfindungsgemäßen Autokindersitzes liegt in der Zweiteiligkeit (Sitzteil 1 und Rücklehne 2) seines Aufbaus, wobei die beiden Teile problemlos, auch bei in Nutzstellung auf dem Fahrzeugsitz aufliegendem Sitzteil 1 zusammengefügt und voneinander gelöst werden können. Dazu sind keine zusätzlichen Fixierelemente vorhanden oder etwa zu betätigen. In ihrer Sitz- und Liegestellung (Fig. 4 und 5) hingegen sind Sitzteil 1 und Rücklehne 2 unlösbar miteinander verbunden.

### Bezugszeichenliste

- 1: Sitzteil
- 2: Rücklehne
- 3: rückseitiges Ende
- 4: Fahrrichtung
- 5: Stecköffnung
- 6: Stecköffnung
- 7: Stecklaschen
- 8: Stecklaschen
- 9: Blickrichtung
- 10: Fußschenkel
- 11: Kopfschenkel
- 12: Hohlkehle
- 13: Schwenklasche
- 14: Begrenzungssteg
- 15: Führungspfeil
- 16: Pfeilrichtung
- 17: Schwenkwinkel
- 18: Schwenkrichtung
- 19: Rumpfteil
- 20: Fügewinkel
- 21: vorders. Begrenzungskante

## Patentansprüche

1. Autokindersitz mit
- einem Sitzteil (1) und
- einer am hinteren Sitzteilende (3) schwenkbar geführten und lösbar angeordneten Rücklehne (2),
dadurch gekennzeichnet,
daß die Rücklehne (2) mit mindestens einer an ihrem unteren Ende befindlichen Stecklasche (7,8) in mindestens eine Stecköffnung (5,6) am hinteren Sitzteilende (3) einsetzbar und unter Vergrößerung des von Sitzteil (1) und Rücklehne (2) gebildeten Fügewinkels (20) in ihre Sitz- und/oder Liegestellung vom Sitzteil (1) wegschwenkbar (18) ist.

2. Kindersitz nach Anspruch 1,
dadurch gekennzeichnet,
daß der hintere Begrenzungssteg (14) der Stecköffnung (5,6) eine Schwenkachse (13) bildet, die bei Wegschwenkung der eingesetzten Rücklehne (2) von einer an der Stecklasche (7,8) befindlichen Hohlkehle (12) nach Art einer Gleitschale beaufschlagt ist.

3. Kindersitz nach Anspruch 1 oder 2,
gekennzeichnet durch
eine einstückige Ausbildung von Sitzteil (1) mit Stecköffnung (5,6) und/oder Rücklehne (2) mit Stecklasche (7,8) aus Kunststoff.

4. Kindersitz nach Anspruch 3,
dadurch gekennzeichnet,
daß Sitzteil (1) und Rücklehne (2) aus Kunststoff gefertigte Blasteile sind.

5. Kindersitz nach einem oder mehreren der vorhergehenden Ansprüche,
dadurch gekennzeichnet,
daß die Stecklasche (7,8) zu etwa der Querschnittsform eines in Steckrichtung (15) ausgerichteten Z mit zwischen dessen horizontalem Fußschenkel (10) und dessen Rumpfteil (19) gebildeter Hohlkehle (12) abgestuft ist.

6. Kindersitz nach einem oder mehreren der vorhergehenden Ansprüche,
dadurch gekennzeichnet,
daß die Stecklasche (7,8) in Sitz- oder Liegestellung der Rücklehne (2) mit der Brust ihres Rumpfteiles (19) an der vorderen Begrenzungskante (21) der Stecköffnung (5,6) abgestützt ist.

7. Kindersitz nach Anspruch 5 oder 6,
gekennzeichnet
durch eine Sitzstellung mit kleinerem Fügewinkel (20) und durch eine Liegestellung mit größerem Fügewinkel (21) zwischen Rücklehne (2) und Sitzteil (1), wobei der Kopfschenkel (11) der Z-Form der Stecklasche (7,8) als die Neigung der Rücklehne (2) in deren Liegestellung limitierender Schwenkanschlag an die vordere Begrenzungskante (21) der Stecköffnung (5,6) anschlägt.

## Claims

1. Child's car seat having
- a seat part (1), and
- a backrest (2) which is arranged releasably, and guided pivotably, on the rear seat-part end (3),
characterized in that the backrest (2) can be inserted, by way of at least one plug-in lug (7, 8) located at its bottom end, into at least one plug-in opening (5, 6) at the rear seat-part end (3) and, with an increase in the joining angle (20) formed by the seat part (1) and backrest (2), can be pivoted away from the seat part (1) into its sitting position and/or lying position.

2. Child seat according to Claim 1, characterized in that the rear boundary crosspiece (14) of the plug-in opening (5, 6) forms a pivot axis (13) on which, during the pivoting-away action of the inserted backrest (2), a hollow channel (12) located on the plug-in lug (7, 8) acts in the manner of a sliding shell.

3. Child seat according to Claim 1 or 2, characterized by a single-piece design of the seat part (1) with plug-in opening (5, 6) and/or backrest (2) with plug-in lug (7, 8) from plastic.

4. Child seat according to Claim 3, characterized in that the seat part (1) and backrest (2) are blow mouldings produced from plastic.

5. Child seat according to one or more of the preceding claims, characterized in that the plug-in lug (7, 8) is stepped to give approximately the cross-sectional shape of a Z which is aligned in the plug-in direction (15) and has a hollow channel (12) formed between its horizontal bottom leg (10) and its trunk part (19).

6. Child seat according to one or more of the preceding claims, characterized in that, in the sitting position or lying position of the backrest (2), the plug-in lug (7, 8) is supported, by way of the front of its trunk part (19), on the front boundary edge (21) of the plug-in opening (5, 6).

7. Child seat according to Claim 5 or 6, characterized by a sitting position with a relatively small joining angle (20), and by a lying position with a relatively large joining angle (20), between the back rest (2) and seat part (1), it being the case that the top leg (11) of the Z-shape of the plug-in lug (7, 8) strikes against the front boundary edge (21) of the plug-in opening (5, 6) as a pivot stop which limits the inclination of the backrest (2) in the lying position of the latter.

## Revendications

1. Siège d'enfant pour véhicules, comportant
- une partie d'assise (1) et
- un dossier (2) mené en pivotement et agencé de façon détachable à l'extrémité arrière (3) de la partie d'assise,
caractérisé en ce que
le dossier (2) est susceptible d'être mis en place par au moins une patte d'enfichage (7, 8) située à son extrémité inférieure dans au moins une ouverture d'enfichage (5, 6) à l'extrémité arrière (3) de la partie d'assise et susceptible de pivoter dans sa position assise et/ou couchée en éloignement de la partie d'assise (1) par augmentation de l'angle d'assemblage (20) formé par la partie d'assise (1) et par le dossier (2).

2. Siège d'enfant selon la revendication 1, caractérisé en ce que la barrette de limitation arrière (14) de l'ouverture d'enfichage (5, 6) forme un axe de pivotement (13) qui est attaqué par une moulure creuse (12) située sur la patte d'enfichage (7, 8) à la manière d'une coque coulissante, lors du pivotement en éloignement du dossier (2) mis en place.

3. Siège d'enfant selon l'une ou l'autre des revendications 1 et 2, caractérisé par une réalisation en une seule pièce de la partie d'assise (1) avec l'ouverture d'enfichage (5, 6), et/ou du dossier (2) avec la patte d'enfichage (7, 8) en matière plastique.

4. Siège d'enfant selon la revendication 3, caractérisé en ce que la partie d'assise (1) et le dossier (2) sont des composants réalisés par soufflage en matière plastique.

5. Siège d'enfant selon l'une ou plusieurs des revendications précédentes, caractérisé en ce que la patte d'enfichage (7, 8) est échelonnée de manière à présenter en section transversale approximativement la forme d'un Z orienté en direction d'enfichage (15), comportant la moulure creuse (12) formée entre sa partie de pied horizontale (10) et sa partie de corps (19).

6. Siège d'enfant selon l'une ou plusieurs des revendications précédentes, caractérisé en ce que la patte d'enfichage (7, 8) est appuyée en position assise ou couchée du dossier (2) par la face antérieure de sa partie de corps (19) contre l'arête de limitation avant (21) de l'ouverture d'enfichage (5, 6).

7. Siège d'enfant selon l'une ou l'autre des revendications 5 et 6, caractérisé par une position assise présentant un angle d'assemblage plus petit (20) et par une position couchée présentant un angle d'assemblage plus grand (20) entre le dossier (2) et la partie d'assise (1), dans lequel la partie de tête (11) de la forme en Z de la patte d'enfichage (7, 8) bute, en tant que butée de pivotement limitant l'inclinaison du dossier (2) dans sa position couchée, contre l'arête de limitation avant (21) de l'ouverture d'enfichage (5, 6).
